(19) Europäisches Patentamt
European Patent Office
Office européen des brevets

(11) **EP 4 198 600 A1**

(12) **EUROPEAN PATENT APPLICATION**
published in accordance with Art. 153(4) EPC

(43) Date of publication:
**21.06.2023 Bulletin 2023/25**

(21) Application number: **21856225.4**

(22) Date of filing: **11.08.2021**

(51) International Patent Classification (IPC):
*G02B 13/00* (2006.01)    *G02B 9/64* (2006.01)
*G02B 3/00* (2006.01)    *G02B 3/04* (2006.01)
*G02B 5/20* (2006.01)

(52) Cooperative Patent Classification (CPC):
**G02B 3/00; G02B 3/04; G02B 5/20; G02B 9/64; G02B 13/00**

(86) International application number:
**PCT/KR2021/010652**

(87) International publication number:
**WO 2022/035219 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.08.2020 KR 20200100430**

(71) Applicant: **LG Innotek Co., Ltd.**
**Seoul 07796 (KR)**

(72) Inventor: **KWON, Duk Keun**
**Seoul 07796 (KR)**

(74) Representative: **M. Zardi & Co S.A.**
**Via G. B. Pioda, 6**
**6900 Lugano (CH)**

(54) **OPTICAL SYSTEM**

(57) The optical system disclosed in the embodiment of the invention includes a first lens, a second lens, a third lens, a fourth lens, a fifth lens, a sixth lens, a seventh lens, and a eighth lens sequentially disposed along an optical axis from an object side to an image side, wherein the second lens has positive refractive power, the third lens has negative refractive power, the seventh lens has positive refractive power, and the eighth lens has negative refractive power, wherien refractive indices of the first, third, and fifth lenses are greater than those of the second, fourth, sixth, and eighth lenses, and have a relationship of 1.2 < F / D1 < 2.4, where F is a total effective focal length of the optical system, and D1 may be an effective diameter of the first lens.

FIG. 1

EP 4 198 600 A1

**Description**

[Technical Field]

The embodiment relates to an optical system for high resolution.

[Background Art]

The camera module captures an object and stores it as an image or video, and is installed in various applications. In particular, the camera module is produced in a very small size and is applied to not only portable devices such as smartphones, tablet PCs, and laptops, but also drones and vehicles to provide various functions.
For example, the optical system of the camera module may include an imaging lens for forming an image, and an image sensor for converting the formed image into an electrical signal. In this case, the camera module may perform an autofocus (AF) function of aligning the focal lengths of the lenses by automatically adjusting the distance between the image sensor and the imaging lens, and may perform a zooning function of zooming up or zooning out by increasing or decreasing the magnification of a remote object through a zoom lens. In addition, the camera module employs an image stabilization (IS) technology to correct or prevent image stabilization due to an unstable fixing device or a camera movement caused by a user's movement.
The most important element for this camera module to obtain an image is an imaging lens that forms an image side. Recently, interest in high resolution is increasing, and research using five or six lenses is being conducted in order to realize this. For example, research using a plurality of imaging lenses having positive (+) and/or negative (-) refractive power is being conducted to realize high resolution. However, when a plurality of lenses is included, there is a problem in that it is difficult to derive excellent optical properties and aberration properties. Accordingly, a new optical system capable of solving the above problems is required.

[Disclosure]

[Technical Problem]

An embodiment of the invention provides an optical system with improved optical properties.
An embodiment of the invention provides an optical system having at least 8 lenses.

[Technical Solution]

An optical system according to an embodiment of the invention includes a first lens, a second lens, a third lens, a fourth lens, a fifth lens, a sixth lens, a seventh lens, and an eighth lens sequentially disposed along an optical axis from an object side to an image side, wherein the second lens has positive refractive power, the third lens has negative refractive power, the seventh lens has positive refractive power, and the eighth lens has negative refractive power, wherein refractive indices of the first, third, and fifth lenses are greater than refractive indices of the second, fourth, sixth, and eighth lenses, and have a relationship of 1.2 < F / D1 < 2.4, where F is total effective focal length of the optical system, and D1 may be an effective diameter of the first lens.
According to an embodiment of the invention, a center thickness of the second lens may be thicker than a center thickness of each of the first, third to eighth lenses. Abbe numbers of the second, fourth, sixth, and eighth lenses may be 50 or more, and Abbe numbers of the third and fifth lenses may be less than 30.
According to an embodiment of the invention, the optical system includes an image sensor on an image side of the eighth lens; and an optical filter between the image sensor and an eighth lens, wherein the optical system satisfies the following Equations 1 and 2:

$$[\text{Equation 1}] \ 0 < \text{BFL/TTL} < 0.5$$

and

$$[\text{Equation 2}] \ 0 < \text{BFL/Img} < 0.5,$$

where BFL is a distance from an apex of an image-side surface of the eighth lens to the image sensor, TTL is a distance from an apex of an object-side first surface of the first lens to the image sensor, and Img may be a vertical distance from the optical axis to 1.0F, which is a diagonal end, on the image sensor.

According to an embodiment of the invention, the optical system includes an image sensor on the image side of the eighth lens and an optical filter between the image sensor and the eighth lens, and the optical system satisfies the following equation 5:

$$[Equation\ 5]\ 0.5 < TTL\ /D8 < 1.5,$$

where TTL is a distance from the apex of the object-side first surface of the first lens to the image sensor, and D8 may be an effective diameter of the eighth lens.

According to an embodiment of the invention, the optical system satisfies the following equation: [Equation] $0.5 < f2/F < 1.5$, [Equation] $-5 < f2/f3 < 0$, and F is total effective focal length of the optical system, f2 may be a focal length of the second lens, and f3 may be a focal length of the third lens.

An optical system according to an embodiment of the invention includes a first lens, a second lens, a third lens, a fourth lens, a fifth lens, a sixth lens, a seventh lens, and a eighth lens sequentially disposed along an optical axis from an object side to an image side, wherein a center thickness of the second lens is greater than a center thickness of each of the first, third to eighth lenses, an Abbe number of the second lens is greater than an Abbe numbers of the third and fifth lenses, and the optical system satisfies the following equation:

$$0.5 < TTL/D8 < 1.5 \text{ and } 0 < |f2/f3| < 5$$

TTL is a distance from an apex of the object-side first surface of the first lens to the image sensor, D8 is an effective diameter of the eighth lens, f2 is a focal length of the second lens, and f3 may be a focal length of the third lens.

According to an embodiment of the invention, a radius of curvature of an object-side surface of the second lens is L2R1 and an absolute value of a radius of curvature of the image-side surface of the second lens is |L2R2|, the following equation may be satisfied: $0 < L2R1/|L2R2| < 1$.

According to an embodiment of the invention, when a radius of curvature of an object-side surface of the third lens is L3R1 and an absolute value of a radius of curvature of an image-side surface of the second lens is |L3R2|, the following equation may be satisfied: $0 < L3R2/|L3R1| < 1$.

According to an embodiment of the invention, when a refractive index of the second lens at 587 nm is G2 and a refractive index of the third lens at 587 nm is G3, the following relationship may be satisfied: $0.7 < G2/G3 < 1.2$. A center thickness of the second lens is T2 and the center thickness of the third lens is T3, the following relationship may be satisfied: $1 < T2/T3 < 5$.

An optical system according to an embodiment of the invention includes a first lens, a second lens, a third lens, a fourth lens, a fifth lens, a sixth lens, a seventh lens, and an eighth lens sequentially disposed along an optical axis from an object side to an image side, and the following equations may be satisfied:

$$[Equation\ 4]\ 1.2 < F/D1 < 2.4$$

$$[Equation\ 5]\ 0.5 < TTL/D8 < 1.5$$

$$[Equation\ 7]\ 0 < |f2/f3| < 5$$

Here, F is the total effective focal length of the optical system, D1 is the effective diameter of the first lens, TTL is the distance from the apex of the object-side first surface of the first lens to the image sensor, and D8 is an effective diameter of the eighth lens, f2 may be a focal length of the second lens, and f3 may be a focal length of the third lens.

According to an embodiment of the invention, a first distance between the seventh lens and the eighth lens on the optical axis may be greater than a second distance between the first lens and the second lens. The first distance and the second distance may be greater than or equal to 0.4 mm. The center thickness of the second lens may be in the range of 2 to 4 times that of the center thickness of the third lens.

[Advantageous Effects]

The optical system according to the embodiment may correct aberration characteristics and implement a slim optical system. Accordingly, the optical system may be miniaturized and high image quality and high resolution may be realized.

In addition, the optical system according to the embodiment may block unnecessary light entering the optical system. Accordingly, it is possible to improve performance of the optical system by reducing aberration.

[Description of Drawings]

FIG. 1 is a configuration diagram of an optical system according to a first embodiment of the invention.
FIG. 2 is a configuration diagram of an optical system according to a second embodiment of the invention.
FIG. 3 is a configuration diagram of an optical system according to a third embodiment of the invention.
FIG. 4 is a perspective view of a mobile terminal having an optical system according to an embodiment of the invention.

[Best Mode]

Hereinafter, preferred embodiments of the invention will be described in detail with reference to the accompanying drawings. A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology. Further, the terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

In the description of the invention, the first lens means a lens closest to the object side, and the last lens means a lens closest to the image side (or sensor surface). Unless otherwise specified in the description of the invention, all units for the radius, effective diameter, thickness, distance, BFL (Back Focal Length), TTL (Total track length or Total Top Length) of the lens are mm. In this specification, a shape of the lens is shown based on the optical axis of the lens. For example, the fact that the object side of the lens is convex means that the object side of the lens is convex on the vicinity of the optical axis, not convex around the optical axis. Therefore, even when it is described that the object side of the lens is convex, the portion around the optical axis on the object side of the lens may be concave. In this specification, it is noted that the thickness and radius of curvature of the lens are measured based on the optical axis of the lens. In addition, "object-side surface" may mean a surface of a lens facing an object side based on an optical axis, and "image side" may mean a surface of a lens facing an imaging surface based on an optical axis.

An optical system according to an embodiment of the invention may include a plurality of lenses. In detail, the optical system according to the first to third embodiments may include at least eight lenses. As the resolution increases, the size of the image sensor also increases, and the number of lenses gradually increases according to the resolution of the image sensor. An embodiment of the invention is to provide a high-resolution optical system using at least eight lenses.

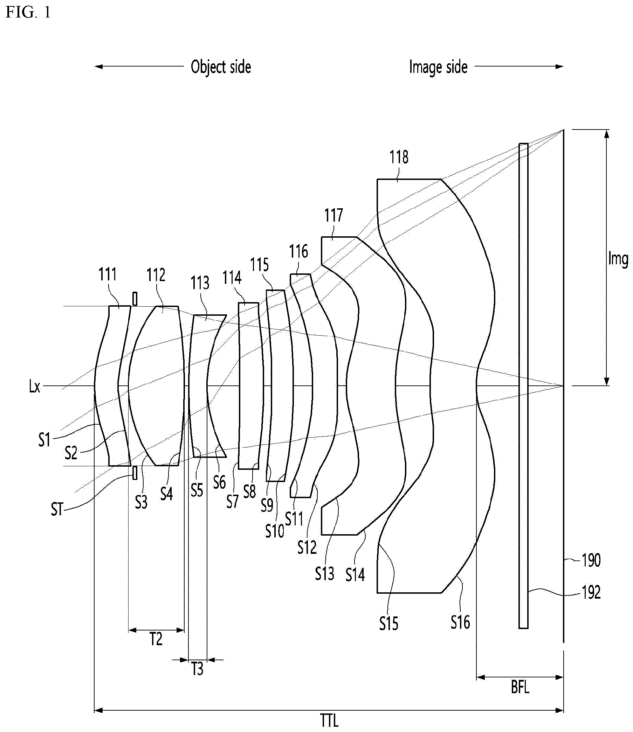

Referring to FIG. 1, the optical system of the first embodiment may include, for example, a first lens 111, a second lens 112, a third lens 113, a fourth lens 114, a fifth lens 115, a sixth lens 116, a seventh lens 117, and an eighth lens 118 sequentially arranged from the object side to the image side. The optical system may include an optical filter 192 and an image sensor 190. An optical system having the plurality of lenses 111 to 118 may be defined as a lens optical system, and an optical system further including the lenses 111 to 118, an optical filter 192, and an image sensor 192 may be defined as a camera module.

The first to eighth lenses 111 to 118 may be sequentially disposed along the optical axis Lx of the optical system. The light corresponding to the image information of the object may be incident through the first lens 111, the second lens 112, the third lens 113, the fourth lens 114, the fifth lens 115, the sixth lens 116, the seventh lens 117 and the eighth lens 118, and may be obtained as electrical signal by the image sensor 190 through the optical filter 192.

Each of the first to eighth lenses 111 to 118 may include an effective region and an ineffective region. The effective region may be a region through which light incident on each lens passes. That is, the effective region may be a region in which the incident light is refracted to implement optical characteristics. The ineffective region may be arranged around the effective region. The ineffective region may be a region in which the light is not incident. That is, the ineffective region may be a region unrelated to the optical characteristics. Also, the ineffective region may be a region fixed to a barrel (not shown) accommodating the lens, or a region in which light is blocked by a light blocking part or a spacer.

The optical system according to the embodiment may include an aperture stop ST for adjusting the amount of incident light. The aperture stop ST may be disposed between two lenses selected from among the first to eighth lenses 111, 112, 113, 114, 115, 116, 117, and 118. For example, the aperture stop ST may be disposed on an outer circumference between the first lens 111 and the second lens 112, or on an outer circumference between the second lens 112 and the third lens 113. The aperture stop ST may be disposed closer to the exit side of the first lens 111 than to the fourth lens 114. As another example, at least one of the first to eighth lenses 111, 112, 113, 114, 115, 116, 117, and 118 may serve as an aperture stop. For example, one surface selected from among the lens surfaces of the first to eighth lenses 111, 112, 113, 114, 115, 116, 117, and 118 may serve as an aperture stop for adjusting the amount of light. For example, the circumference of the image side of the first lens 111 or the circumference of the object side of the second lens 112 may serve as an aperture stop.

The first lens 111 may have positive (+) or negative (-) refractive power. The first lens 111 may include a plastic material. The first lens 111 may include a first surface S1 defined as an object-side surface and a second surface S2 defined as an image-side surface. The first surface S1 may be convex on the optical axis Lx, and the second surface S2 may be concave on the optical axis Lx. That is, the first lens 111 may have a meniscus shape convex toward the object side.

At least one of the first surface S1 and the second surface S2 of the first lens 111 may be an aspherical surface. For example, both the first surface S1 and the second surface S2 may be aspherical. At least one of the first surface S1 and the second surface S2 may have an inflection point. In detail, the first surface S1 may include a first inflection point defined as an inflection point. The first inflection point may be disposed at a position between about 80% and about 99% from the optical axis, when the optical axis Lx is the starting point and an edge of the first lens 111 is the ending point. Here, the location of the first inflection point may be a location set based on a vertical direction of the optical axis Lx. The second surface S2 may include a second inflection point defined as an inflection point. The second inflection point may be disposed at a position between about 60% and about 80% from the optical axis Lx, when the optical axis Lx is a starting point and the edge of the first lens 111 is an end point. Here, the location of the second inflection point may be a location set based on a vertical direction of the optical axis Lx.

The second lens 112 may have positive (+) refractive power. The second lens 112 may include a plastic or glass material. The second lens 112 may include a third surface S3 defined as an object-side surface and a fourth surface S4 defined as an image-side surface. The third surface S3 may be convex on the optical axis Lx and the fourth surface S4 may be convex on the optical axis Lx. That is, the second lens 112 may have a convex shape on both sides. As another example, the third surface S3 may be convex and the fourth surface S4 may be infinity or concave. At least one of the third and fourth surfaces S3 and S4 may have a spherical surface or an aspheric surface. For example, both the third surface S3 and the fourth surface S4 may be aspheric surfaces. The size of the effective diameter of the first lens 111 and/or the second lens 112 may be larger than that of the third lens 113. Here, the effective diameter may be a diameter of a region into which light is incident.

The third lens 113 may have negative (-) refractive power. The third lens 113 may include a plastic or glass material. The third lens 113 may include a fifth surface S5 defined as an object-side surface and a sixth surface S6 defined as an image-side surface. The fifth surface S5 may be convex on the optical axis Lx, and the sixth surface S6 may be concave on the optical axis Lx. That is, the third lens 113 may have a meniscus shape convex toward the object side. As another example, the fifth surface S5 may be flat or concave, and the second lens 112 may have a concave shape on both sides. At least one of the fifth surface S5 and the sixth surface S6 may be a spherical surface or an aspheric surface. For example, both the fifth surface S5 and the sixth surface S6 may be aspheric surfaces.

The fourth lens 114 may have positive (+) or negative (-) refractive power. The fourth lens 114 may include a plastic material. The fourth lens 114 may include a seventh surface S7 defined as an object-side surface and an eighth surface S8 defined as an image-side surface. The seventh surface S7 may be concave on the optical axis Lx and the eighth surface S8 may be convex on the optical axis Lx. That is, the fourth lens 114 may have a meniscus shape convex on the image side. Alternatively, the seventh surface S7 may be flat. At least one of the seventh surface S7 and the eighth surface S8 may be an aspheric surface. For example, both the seventh surface S7 and the eighth surface S8 may be aspheric surfaces.

The fifth lens 115 may have positive (+) or negative (-) refractive power. The fifth lens 115 may include a plastic material. The fifth lens 115 may include a ninth surface S9 defined as an object-side surface and a tenth surface S10 defined as an image-side surface. The ninth surface S9 may be concave on the optical axis Lx, and the tenth surface S10 may be convex on the optical axis Lx. That is, the fifth lens 115 may have a meniscus shape convex to the image side. Alternatively, the ninth surface S9 may be flat. At least one of the ninth surface S9 and the tenth surface S10 may be an aspherical surface. For example, the ninth surface S9 and the tenth surface S10 may be aspheric surfaces.

The sixth lens 116 may have positive (+) or negative (-) refractive power. The sixth lens 116 may include a plastic or glass material. The sixth lens 116 may include an eleventh surface S11 defined as an object-side surface and a twelfth surface S12 defined as an image-side surface. The eleventh surface S11 may be concave on the optical axis Lx, and the twelfth surface S12 may be convex on the optical axis Lx. That is, the sixth lens 116 may have a meniscus shape convex on the image side. At least one of the eleventh surface S11 and the twelfth surface S12 may be an aspheric surface. For example, both the eleventh surface S11 and the twelfth surface may be aspheric surfaces.

At least one of the eleventh surface S11 and the twelfth surface S12 may have an inflection point. The radius of curvature on the center of the eleventh surface S11 of the sixth lens 116 may be smaller than the radius of curvature on the center of the seventh and ninth surfaces S7 and S9 of the fourth and fifth lenses 114 and 116. Here, the effective diameters of the third, fourth, fifth, and sixth lenses 113, 114, 115, and 116 may be larger than those of lenses adjacent to the image side from the object side.

The seventh lens 117 may have positive (+) refractive power. The seventh lens 117 may include a plastic material. The seventh lens 117 may include a thirteenth surface S13 defined as an object-side surface and a fourteenth surface S14 defined as an image-side surface. The thirteenth surface S13 may be convex on the optical axis Lx, and the fourteenth surface S14 may be concave on the optical axis Lx. The thirteenth surface S13 and the fourteenth surface S14 may be aspherical surfaces. At least one or both of the thirteenth surface S13 and the fourteenth surface S14 may have at least one inflection point. In detail, the thirteenth surface S13 may have an inflection point around the center, and the inflection point may be disposed in a position between about 40% to about 60% from the optical axis, when the starting point is the optical axis Lx and the edge of the seventh lens 117 is the end point. Here, the position of the inflection point on the thirteenth surface S13 may be a position set based on the vertical direction of the optical axis Lx. The inflection point of the fourteenth surface S14 may be disposed closer to the edge than the inflection point of the thirteenth surface S13.

The eighth lens 118 may have negative (-) refractive power. The eighth lens 118 may include a plastic material. The eighth lens 118 may include a fifteenth surface S15 defined as an object-side surface and a sixteenth surface S16 defined as an image-side surface. The fifteenth surface S15 may be convex on the optical axis Lx, and the sixteenth surface S16 may be concave on the optical axis Lx. The fifteenth surface S15 and the sixteenth surface S16 may be aspheric surfaces. Each of the fifteenth surface S15 and the sixteenth surface S16 may have at least one inflection point. At least one of the fifteenth surface S15 and the sixteenth surface S16 may have an inflection point. In detail, the fifteenth surface S15 may have an inflection point around the center, and the inflection point may be disposed in a position between about 15% to about 50% from the optical axis, when the starting point is the optical axis Lx and the edge of the eighth lens 118. Here, the location of the inflection point on the fifteenth surface S15 may be a location set based on the vertical direction of the optical axis Lx. The inflection point of the sixteenth surface S16 may be disposed closer to the edge than the inflection point of the fifteenth surface S15.

The optical filter 192 may include at least one of an infrared filter and an optical filter such as a cover glass. The optical filter 192 may pass light of a set wavelength band and filter light of a different wavelength band. When the optical filter 192 includes an infrared filter, radiant heat emitted from external light may be blocked from being transferred to the image sensor. In addition, the optical filter 192 can transmit visible light and reflect infrared light. The image sensor 190 may detect light. The image sensor 190 may include a Charge Coupled Device (CCD) or Complementary Metal Oxide Semiconductor (CMOS).

In the optical system of the first embodiment, all of the first to sixteenth surfaces S1 to S16 of the first to eighth lenses 111 to 118 may be aspheric surfaces. Among the radii of curvature of the first to sixteenth surfaces S1 to S16 (changed in absolute values), the radius of curvature of the seventh surface S7 may be the largest. The thirteenth surface S13 may have a radius of curvature of 2.5 mm or less, which is smaller than the radius of curvature of the other surfaces. In the Abbe numbers of the first to eighth lenses 111 to 118, Abbe numbers of the second lens 112, the fourth lens 114, the sixth lens 116, and the eighth lens 118 are 50 or more, and Abbe numbers of the first lens 111, the third lens 113, the fifth lens 115, and the seventh lens 117 may be less than or equal to 30. In the refractive indices of the first to eighth lenses 111 to 118, the refractive indices of the first lens 111, the third lens 113, the fifth lens 115, and the seventh lens 117 are 1.6 or more, and the refractive indices of the second lens 112, the fourth lens 114, the sixth lens 116, and the eighth lens 118 may be less than 1.6. The third lens 113 and the fifth lens 115 have the highest refractive index and may be 1.65 or more.

Table 1 shows the data of the radius of curvature, thickness, distance, refractive index, and Abbe number of the surface of each lens of the first embodiment.

[Table 1]

| Lens | Surface | Radius (mm) of curvature | Thickness (mm)/ Distance (mm) | Index | Abbe # |
|---|---|---|---|---|---|
| LENS 1 | S1 | 2.724 | 0.315 | 1.6142 | 25.592 |
| | S2 | 2.472 | 0.218 | | |
| Aperture stop | Stop | Infinity | -0.100 | | |
| LENS 2 | S3 | 2.213 | 0.771 | 1.5441 | 56.115 |
| | S4 | -26.543 | 0.050 | | |
| LENS 3 | S5 | 6.013 | 0.250 | 1.6714 | 19.238 |
| | S6 | 2.967 | 0.424 | | |
| LENS 4 | S7 | 38.964 | 0.320 | 1.5441 | 56.115 |
| | S8 | -18.514 | 0.105 | | |
| LENS 5 | S9 | -15.752 | 0.292 | 1.6714 | 19.238 |
| | S10 | -17.115 | 0.257 | | |
| LENS 6 | S11 | -7.290 | 0.327 | 1.5441 | 56.115 |
| | S12 | 9.322 | 0.114 | | |
| LENS 7 | S13 | 2.066 | 0.659 | 1.6142 | 25.592 |
| | S14 | 4.971 | 0.458 | | |
| LENS 8 | S15 | 2.840 | 0.621 | 1.5343 | 55.656 |
| | S16 | 1.50 | 0.573 | | |
| Optical filter | S17 | Infinity | 0.110 | 1.5168 | 64.198 |
| | S18 | Infinity | 0.482 | | |

In Table 1, the thickness is a center thickness (mm) of each lens, and the distance is a distance (mm) between two adjacent lenses. S17 means the incident-side surface of the optical filter, and S18 is the exit surface of the optical filter. Comparing the radius of curvature as an absolute value, the radius of curvature of the seventh surface S7 of the fourth lens 114 may be the largest in the lens, and may be more than twice of the radius of curvature of the ninth surface S9 and the tenth surface S10 of the fifth lens 115. The radius of curvature of the tenth surface S10 may be greater than that of the ninth surface S9. Among the first to fifth lenses 111 to 115, the second lens has the thickest center thickness, and the distance between the third and fourth lenses 113 and 114 may be greater than the distance between the first and second lenses 111 and 112, and may be smaller than the center thickness of the seventh and eighth lenses 117 and 118. The center thickness of the second lens 112 may be the thickest among lenses.

Table 2 shows values of aspheric coefficients of surfaces of each lens in FIG. 1.

[Table 2]

| Surface | K | A | B | C | D | E | F | G | H | J |
|---|---|---|---|---|---|---|---|---|---|---|
| S1 | - 3.9899574 | - 0.0180057 | - 0.0124644 | 0.0170167 | - 0.0410195 | 0.057955 | - 0.0464868 | 0.0218303 | - 0.005584 | 0.0005978 |
| S2 | - 23.0590134 | 0.097822 | - 0.2675848 | 0.345103 | - 0.3297477 | 0.2387919 | - 0.1212616 | 0.0398642 | - 0.0075877 | 0.0006337 |

(continued)

| Surface | K | A | B | C | D | E | F | G | H | J |
|---|---|---|---|---|---|---|---|---|---|---|
| S3 | - 17.0162005 | 0.1530463 | - 0.2354327 | 0.2433468 | - 0.1458932 | 0.0242123 | 0.0389477 | - 0.0339407 | 0.0114453 | - 0.0014715 |
| S4 | 0 | - 0.0337116 | 0.0828922 | -0.1956699 | 0.2714156 | - 0.2343141 | 0.128418 | - 0.0434922 | 0.0082855 | - 0.0006877 |
| S5 | 0 | - 0.0776521 | 0.074879 | -0.0450705 | - 0.0626064 | 0.1961302 | - 0.2156938 | 0.1225191 | - 0.0357757 | 0.0042551 |
| S6 | - 6.832222 | - 0.0178272 | 0.0234282 | 0.0366163 | - 0.1298007 | 0.1999169 | - 0.1758386 | 0.0900978 | - 0.024869 | 0.0028523 |
| S7 | 0 | - 0.0427572 | 0.123517 | -0.3431676 | 0.5806861 | - 0.6406142 | 0.4632482 | - 0.2089351 | 0.0531806 | - 0.0058518 |
| S8 | 0 | - 0.0637483 | 0.2486185 | -0.5425697 | 0.7036447 | - 0.5917804 | 0.3269063 | - 0.1131263 | 0.0220976 | - 0.0018577 |
| S9 | 0 | - 0.0231283 | 0.1331634 | -0.2949808 | 0.3641274 | 0.2762297 | 0.1321232 | 0.0387519 | 0.0063289 | 0.0004375 |
| S13 | 0 | 0.004214 | - 0.0015675 | -0.0296578 | 0.0347705 | - 0.0115008 | - 0.0036509 | 0.0038033 | - 0.0010449 | 0.000 1 |
| S14 | 7.7479937 | - 0.0346341 | 0.069187 | -0.077867 | 0.0324081 | 0.0058268 | - 0.0113402 | 0.0048687 | - 0.0009648 | 7.52E-05 |
| S13 | 0 | - 0.2900486 | 0.3570901 | -0.3414314 | 0.2316894 | - 0.1103664 | 0.036004 | - 0.0075061 | 0.0008865 | - 4.48E-05 |
| S13 | - 8.6977922 | - 0.0770769 | 0.0993536 | -0.1025379 | 0.0637621 | - 0.0266614 | 0.0075595 | - 0.0014022 | 0.000153 | - 7.35E-06 |
| S14 | - 2.2384925 | 0.0066676 | - 0.0104493 | -0.0032436 | 0.0029417 | - 0.0008717 | 0.0001259 | - 7.07E-06 | - 1.96E-07 | 2.81E-08 |
| S15 | - 3.4626653 | - 0.2004288 | 0.1066778 | -0.0480989 | 0.0152998 | - 0.0031068 | 0.0003963 | - 3.09E-05 | 1.35E-06 | - 2.56E-08 |
| S16 | - 5.4258583 | - 0.0823113 | 0.0360439 | -0.0125638 | 0.0029351 | - 0.0004365 | 4.11E-05 | - 2.40E-06 | 7.99E-08 | - 1.16E-09 |

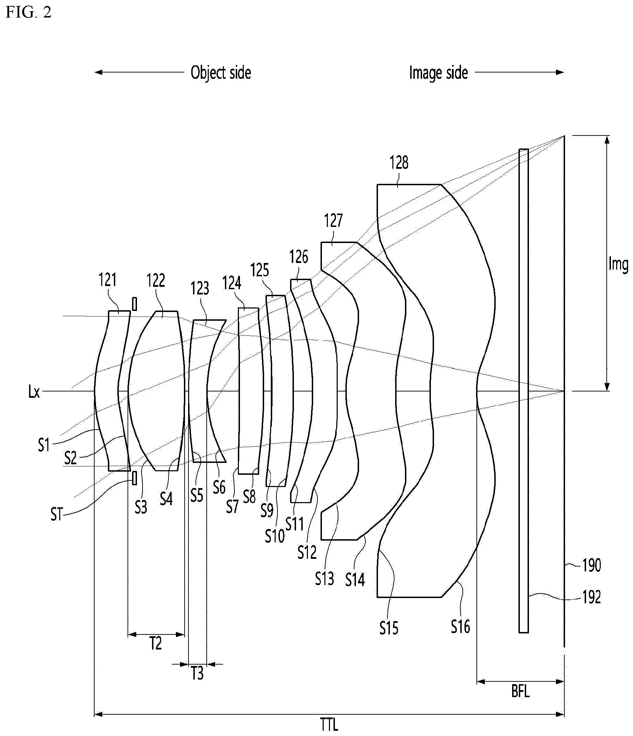

Referring to FIG. 2, the optical system of the second embodiment may include, for example, a first lens 121, a second lens 122, a third lens 123, a fourth lens 124, a fifth lens 125, a sixth lens 126, a seventh lens 127, and an eighth lens 128 sequentially arranged from the object side to the image side. The optical system may include an optical filter 192 and an image sensor 190. The first to eighth lenses 121 to 128 may be sequentially disposed along the optical axis Lx of the optical system. The light corresponding to the image information of the object is incident through the first lens 121 to the eighth lens 128, and passes through the optical filter 192, and may be obtained as an electrical signal by the image sensor 190. Each of the first to eighth lenses 121 to 128 may include an effective region and an ineffective region. The effective region may be a region through which light incident on each lens passes. That is, the effective region may be a region in which the incident light is refracted to implement optical characteristics. The ineffective region may be arranged around the effective region. The ineffective region may be a region in which the light is not incident. That is, the ineffective region may be a region unrelated to the optical characteristics. Also, the ineffective region may be a region fixed to a barrel (not shown) accommodating the lens, or a region in which light is blocked by a light blocking part or a spacer.

The aperture stop ST may be disposed between two lenses selected from among the first to eighth lenses 121 to 128. For example, the aperture stop ST may be disposed on an outer circumference between the first lens 121 and the second lens 122, or on an outer circumference between the second lens 122 and the third lens 123. The aperture stop ST may be disposed closer to the exit-side surface of the first lens 121 than the fourth lens 124. As another example, at least one lens among the first to eighth lenses 121 to 128 may serve as an aperture stop. For example, one surface selected from the lens surfaces of the first to eighth lenses 121 to 128 may serve as an aperture stop for adjusting the amount of light. For example, the circumference of the image side of the first lens 121 or the circumference of the object side of the second lens 122 may serve as an aperture stop. In the optical system of the second embodiment, each lens may have a difference in the curvature of the object-side surface and the image-side surface of each lens of the first embodiment, a difference in thickness or refractive index of the center of each lens, and a difference in a distance between the other lenses, which will be described below.

Referring to FIG. 2, in the optical system of the second embodiment, all of the first to sixteenth surfaces S1 to S16 of the first to eighth lenses 121 to 128 may be aspheric surfaces. Among the radii of curvature (including absolute values) of the first to sixteenth surfaces S1 to S16, the radius of curvature of the seventh surface S7 may be the largest, and the third surface S3 and the thirteenth surface S13 may have a radius of curvature of 2.5 mm or less, which is smaller than the radius of curvature of the other surface. In the Abbe numbers of the first to eighth lenses 121 to 128, the Abbe number of the first lens 121, the second lens 122, the fourth lens 124, the sixth lens 126, and the eighth lens 128 may be 50 or more, and the Abbe numbers of the third lens 123, the fifth lens 125, and the seventh lens 127 may be 30 or less. In the refractive indices of the first to eighth lenses 121 to 128, the refractive indices of the first lens 121, the third lens 123, the fifth lens 125, and the seventh lens 127 are 1.6 or more, and the refractive indices of the second lens 122, the fourth lens 124, the sixth lens 126, and the eighth lens 128 may be less than 1.6. The third lens 123 and the fifth lens 125 have the highest refractive index and may be 1.65 or more.

Table 3 shows the data of the radius of curvature, thickness, distance, refractive index, and Abbe number of the surface of each lens of the second embodiment.

[Table 3]

| Lens | Surface | Radius (mm) of curvature | Thickness (mm)/ Distance (mm) | Index | Abbe # |
|---|---|---|---|---|---|
| LENS 1 | S1 | 2.704 | 0.336 | 1.5441 | 56.115 |
| | S2 | 2.537 | 0.226 | | |
| Aperture stop | Stop | Infinity | -0.100 | | |
| LENS 2 | S3 | 2.293 | 0.772 | 1.5441 | 56.115 |
| | S4 | -24.290 | 0.050 | | |
| LENS 3 | S5 | 5.394 | 0.250 | 1.6714 | 19.238 |
| | S6 | 2.886 | 0.507 | | |
| LENS 4 | S7 | 454.728 | 0.320 | 1.5441 | 56.115 |
| | S8 | -11.396 | 0.102 | | |
| LENS 5 | S9 | -11.581 | 0.280 | 1.6714 | 19.238 |
| | S10 | -18.105 | 0.252 | | |
| LENS 6 | S11 | -8.232 | 0.365 | 1.5441 | 56.115 |
| | S12 | 10.206 | 0.082 | | |
| LENS 7 | S13 | 2.154 | 0.611 | 1.6142 | 25.592 |
| | S14 | 5.014 | 0.481 | | |

(continued)

| Lens | Surface | Radius (mm) of curvature | Thickness (mm)/ Distance (mm) | Index | Abbe # |
|---|---|---|---|---|---|
| LENS 8 | S15 | 2.984 | 0.606 | 1.5343 | 55.656 |
| | S16 | 1.501 | 0.573 | | |
| Optical filter | S17 | Infinity | 0.110 | 1.5168 | 64.198 |
| | S18 | Infinity | 0.463 | | |

In Table 2, the thickness is a center thickness (mm) of each lens, and the distance is a distance (mm) between two adjacent lenses. S17 means the incident-side surface of the optical filter, and S18 means the exit-side surface of the optical filter. Comparing the radius of curvature as an absolute value, the radius of curvature of the seventh surface S7 of the fourth lens 124 may be the largest in the lens, and may be 40 times larger than the radius of the curvature of the ninth surface S9 of the fifth lens 125. The radius of curvature of the tenth surface S10 may be greater than that of the ninth surface S9. Among the first to fifth lenses 121 to 125, the lens having the thickest center thickness is the second lens, and the distance between the third and fourth lenses 123 and 124 may be greater than the distance between the first and second lenses 121 and 122, and may be smaller than the center thickness of the seventh and eighth lenses 127 and 128. The center thickness of the second lens 122 may be the thickest among lenses.

Table 4 shows values of aspheric coefficients of surfaces of each lens in FIG. 2.

[Table 4]

| Surface | K | A | B | C | D | E | F | G | H | J |
|---|---|---|---|---|---|---|---|---|---|---|
| S1 | - 3.85643 | 0.015 82 | 0.008 65 | 0.008 57 | 0.017 35 | - 0.015 77 | 0.008 88 | - 0.002 79 | 0.000 41 | - 1.64E-05 |
| S2 | - 23.2898 | 0.095 92 | - 0.260 52 | 0.322 69 | - 0.289 52 | 0.193 98 | - 0.089 73 | 0.026 23 | - 0.004 28 | 0.000 29 |
| S3 | - 17.2320 1 | 0.147 16 | - 0.222 77 | 0.238 3 | - 0.169 36 | 0.074 76 | - 0.010 17 | - 0.007 8 | 0.004 09 | - 0.000 61 |
| S4 | 0 | - 0.020 01 | 0.038 57 | - 0.090 76 | 0.115 89 | - 0.083 5 | 0.032 82 | - 0.005 54 | - 0.000 25 | 0.000 14 |
| S5 | 0 | - 0.066 7 | 0.049 61 | - 0.025 05 | - 0.025 47 | 0.088 13 | - 0.098 26 | 0.055 42 | - 0.015 86 | 0.001 83 |
| S6 | - 6.84742 | - 0.014 52 | 0.018 28 | 0.025 19 | - 0.082 41 | 0.126 22 | -0.113 | 0.059 75 | - 0.017 19 | 0.002 08 |
| S7 | 0 | - 0.055 64 | 0.164 63 | - 0.433 36 | 0.702 78 | - 0.747 2 | 0.523 21 | - 0.229 64 | 0.057 05 | - 0.006 13 |
| S8 | 0 | - 0.089 19 | 0.355 03 | - 0.738 71 | 0.898 82 | - 0.704 14 | 0.364 33 | - 0.119 71 | 0.022 53 | - 0.001 85 |
| S9 | 0 | - 0.026 32 | 0.161 26 | - 0.329 7 | 0.354 04 | - 0.224 9 | 0.087 71 | - 0.020 48 | 0.002 57 | - 0.000 12 |

(continued)

| Surface | K | A | B | C | D | E | F | G | H | J |
|---|---|---|---|---|---|---|---|---|---|---|
| S13 | 0 | 0.016 3 | - 0.059 42 | 0.074 39 | - 0.082 42 | 0.073 12 | - 0.041 46 | 0.013 78 | - 0.002 46 | 0.000 18 |
| S14 | 11.3092 | - 0.003 67 | - 0.034 79 | 0.060 52 | - 0.075 62 | 0.058 38 | - 0.026 44 | 0.007 01 | - 0.001 02 | 6.23E-05 |
| S13 | 0 | - 0.287 25 | 0.344 22 | - 0.320 89 | 0.214 24 | - 0.100 86 | 0.032 49 | - 0.006 67 | 0.000 77 | - 3.83E-05 |
| S13 | - 10.5342 9 | - 0.092 9 | 0.126 83 | - 0.131 79 | 0.083 29 | - 0.035 12 | 0.009 86 | - 0.001 77 | 0.000 19 | - 8.52E-06 |
| S14 | - 2.33734 | 0.000 7 | - 0.006 46 | - 0.006 36 | 0.004 9 | - 0.001 66 | 0.000 32 | - 3.46E-05 | 1.94E-06 | - 4.10E-08 |
| S15 | - 3.31377 | - 0.213 57 | 0.112 82 | - 0.049 65 | 0.015 69 | - 0.003 21 | 0.000 41 | - 3.29E-05 | 1.46E-06 | - 2.80E-08 |
| S16 | - 5.81739 | - 0.083 43 | 0.034 95 | - 0.011 65 | 0.002 64 | - 0.000 39 | 3.63E-05 | - 2.15E-06 | 7.42E-08 | - 1.14E-09 |

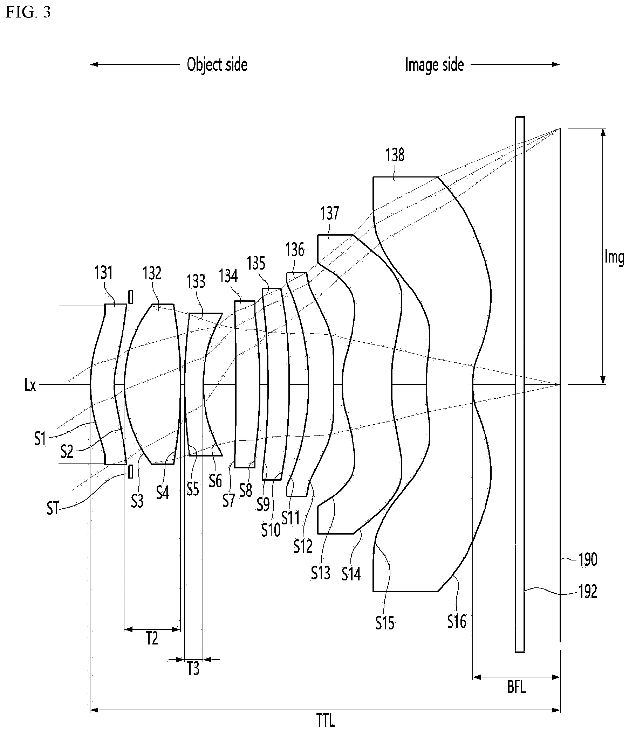

Referring to FIG. 3, the optical system of the third embodiment may include, for example, a first lens 131, a second lens 132, a third lens 133, a fourth lens 134, a fifth lens 135, a sixth lens 136, a seventh lens 137, and an eighth lens 138 sequentially arranged from the object side to the image side. The optical system may include an optical filter 192 and an image sensor 190. The first to eighth lenses 131 to 138 may be sequentially disposed along the optical axis Lx of the optical system. The light corresponding to the image information of the object is incident through the first lens 131 to the eighth lens 138, pass through the optical filter 192, and may be obtained as an electrical signal by the image sensor 190. Each of the first to eighth lenses 131 to 138 may include an effective region and an ineffective region. The effective region may be a region through which light incident on each lens passes. That is, the effective region may be a region in which the incident light is refracted to implement optical characteristics. The ineffective region may be arranged around the effective region. The ineffective region may be a region in which the light is not incident. That is, the ineffective region may be a region unrelated to the optical characteristics. Also, the ineffective region may be a region fixed to a barrel (not shown) accommodating the lens, or a region in which light is blocked by a light blocking part or a spacer.

The aperture stop ST may be disposed between two lenses selected from among the first to eighth lenses 131 to 138. For example, the aperture stop ST may be disposed on an outer circumference between the first lens 131 and the second lens 132, or on an outer circumference between the second lens 132 and the third lens 133. The aperture stop ST may be disposed closer to the exit side of the first lens 131 than to the fourth lens 134. As another example, at least one lens among the first to eighth lenses 131 to 138 may serve as an aperture stop. For example, one surface selected from among the lens surfaces of the first to eighth lenses 131 to 138 may serve as an aperture stop for adjusting the amount of light. For example, the circumference of the image-side surface of the first lens 131 or the circumference of the object-side surface of the second lens 132 may serve as an aperture stop. In the optical system of the third embodiment, each lens may have a difference in the curvature of the object-side surface and the image-side surface of each lens disclosed in the optical system of the first embodiment, a difference in thickness or refractive index of the center of each lens, and a difference in a distance between the other lenses, which will be described below.

In the optical system of FIG. 3, the first to sixteenth surfaces S1 to S16 of the first to eighth lenses 131 to 138 may all be aspheric surfaces. Among the radii of curvature (changed in absolute values) of the first to sixteenth surfaces S1 to S16, the radius of curvature of the seventh surface S7 may be the largest, and the radius of curvature of the third surface may be the smallest when changed in absolute values. In the Abbe numbers of the first to eighth lenses 131 to 138, the the Abbe numbers of the second lens 132, the fourth lens 134, the sixth lens 136, the seventh lens 137, and the eighth lens 138 may be 50 or more, and the Abbe numbers of the first lens 131, the third lens 133, and the fifth lens 135 may be 30 or less. Looking at the refractive indices of the first to eighth lenses 131 to 138, the refractive indices of the first lens 131, the third lens 133, and the fifth lens 135 are 1.6 or more, and the refractive indices of the second lens 132 and the fourth lens 132 have a refractive index of 1.6 or more. The lens 134, the sixth lens 136, the seventh lens 137, and the eighth lens 138 may be less than 1.6. The third lens 133 and the fifth lens 135 have the highest refractive index and may be 1.65 or more.

Table 5 shows the data of the radius of curvature, thickness, distance, refractive index, and Abbe number of the surface of each lens of the third embodiment.

[Table 5]

| Lens | Surface | Radius (mm) of curvature | Thickness (mm)/ Distance (mm) | Index | Abbe # |
|---|---|---|---|---|---|
| LENS 1 | S1 | 2.676 | 0.315 | 1.6142 | 25.592 |
| | S2 | 2.493 | 0.218 | | |
| Aperture stop | Stop | Infinity | -0.100 | | |
| LENS 2 | S3 | 2.253 | 0.771 | 1.5441 | 56.115 |
| | S4 | -21.713 | 0.050 | | |
| LENS 3 | S5 | 5.371 | 0.250 | 1.6714 | 19.238 |
| | S6 | 2.802 | 0.424 | | |
| LENS 4 | S7 | -126.364 | 0.320 | 1.5441 | 56.115 |
| | S8 | -13.002 | 0.105 | | |
| LENS 5 | S9 | -12.814 | 0.292 | 1.6714 | 19.238 |
| | S10 | -16.888 | 0.257 | | |
| LENS 6 | S11 | -8.217 | 0.327 | 1.5441 | 56.115 |
| | S12 | 13.222 | 0.114 | | |
| LENS 7 | S13 | 2.156 | 0.659 | 1.5441 | 56.115 |
| | S14 | 5.105 | 0.458 | | |
| LENS 8 | S15 | 3.051 | 0.621 | 1.5343 | 55.656 |
| | S16 | 1.534 | 0.573 | | |
| Optical filter | S17 | Infinity | 0.110 | 1.5168 | 64.198 |
| | S18 | Infinity | 0.482 | | |

In Table 5, the thickness is a center thickness (mm) of each lens, and the distance is a distance (mm) between two adjacent lenses. S17 means the incident-side surface of the optical filter, and S18 means the exit surface of the optical filter. Comparing the radius of curvature as an absolute value, the radius of curvature of the seventh surface S7 of the fourth lens 134 may be the largest in the lenses, and may be more than 7 times of the radius of the curvature of the ninth and tenth surfaces S9 and S10 of the fifth lens 135. The radius of curvature of the tenth surface S10 may be greater than that of the ninth surface S9. Among the first to fifth lenses 131 to 135, the second lens 132 has the thickest center thickness, and the distance between the third and fourth lenses 133 and 134 may be greater than the distance between the first and second lenses 131 and 132, and may be smaller than the center thickness of the seventh and eighth lenses 137 and 138. The center thickness of the second lens 132 may be the thickest among lenses.

Table 6 shows values of aspheric coefficients of surfaces of each lens in FIG. 3.

[Table 6]

| surface | K | A | B | C | D | E | F | G | H | J |
|---|---|---|---|---|---|---|---|---|---|---|
| S1 | - 3.824 05 | - 0.015 979 | - 0.012 745 | 0.007 088 | - 0.009 028 | 0.010 564 | - 0.0074 32 | 0.003 37 | - 0.000 895 | 0.000 102 |
| S2 | - 23.37 6802 | 0.098 707 | - 0.280 459 | 0.378 444 | - 0.379 995 | 0.287 19 | - 0.1512 26 | 0.051 349 | - 0.010 052 | 0.000 86 |
| S3 | - 17.25 6869 | 0.151 768 | - 0.243 521 | 0.286 253 | - 0.239 181 | 0.139 9 | - 0.0490 88 | 0.006 654 | 0.001 036 | - 0.000 33 |
| S4 | 0 | - 0.020301 | 0.050 383 | - 0.128267 | 0.181 79 | - 0.157058 | 0.0857 11 | - 0.029078 | 0.005 61 | - 0.000478 |
| S5 | 0 | - 0.068 731 | 0.056 411 | - 0.031 686 | - 0.032 594 | 0.111 781 | - 0.1232 9 | 0.069 158 | - 0.019 806 | 0.002 303 |
| S6 | - 6.824 758 | - 0.015 172 | 0.022 052 | 0.017 459 | - 0.070 051 | 0.107 162 | - 0.0918 72 | 0.045 878 | - 0.012 36 | 0.001 387 |
| S7 | 0 | - 0.053 841 | 0.147 341 | - 0.377 815 | 0.610 333 | - 0.654 9 | 0.4665 48 | - 0.208 923 | 0.052 999 | - 0.005 821 |
| S8 | 0 | - 0.077 37 | 0.300 71 | - 0.631 411 | 0.768 434 | - 0.602 758 | 0.3144 71 | - 0.104 808 | 0.020 072 | - 0.001 678 |
| S9 | 0 | - 0.018 354 | 0.140 837 | - 0.307 065 | 0.338 243 | - 0.218 206 | 0.0863 18 | - 0.020 456 | 0.002 594 | - 0.000 126 |
| S13 | 0 | 0.009 933 | - 0.034 786 | 0.031 252 | - 0.036 907 | 0.043 669 | - 0.0297 07 | 0.010 961 | - 0.002 089 | 0.000 162 |
| S14 | 10.59 7962 | - 0.002 865 | - 0.044 995 | 0.080 033 | - 0.095 7 | 0.072 719 | - 0.0333 83 | 0.009 079 | - 0.001 353 | 8.50E -05 |
| S13 | 0 | -0.245 149 | 0.261286 | -0.222 731 | 0.141229 | -0.066 084 | 0.021893 | -0.004 671 | 0.000561 | -2.86E -05 |
| S13 | - 10.35 0554 | - 0.086 688 | 0.104 498 | - 0.101 994 | 0.060 868 | - 0.024 782 | 0.0068 44 | - 0.001 23 | 0.000 13 | - 6.13E -06 |
| S14 | - 2.389 124 | - 0.000 269 | - 0.008 123 | - 0.002 311 | 0.001 764 | - 0.000 369 | 3.22E-06 | 1.12E -05 | - 1.71E -06 | 8.17E -08 |
| S15 | - 3.368 002 | - 0.216 609 | 0.115 498 | - 0.051 423 | 0.016 468 | - 0.003 419 | 4.50E-04 | - 3.64E -05 | 1.66E -06 | - 3.27E -08 |
| S16 | - 5.928 267 | - 0.083 489 | 0.035 188 | - 0.011 648 | 0.002 588 | - 0.000 374 | 3.54E-05 | - 2.17E -06 | 7.88E -08 | - 1.30E -09 |

As in the above embodiment, it may be seen that each lens may be composed of a plastic lens, and all surfaces of each lens have an aspherical surface coefficient. In the first to third embodiments of the invention, the center thickness of the second lenses 112, 122, and 132 is the thickest, and may be, for example, 0.7 mm or more. The distance between the third lens 113, 123, and 133 and the fourth lens 114, 124, and 134 and the distance between the seventh lens 117, 127, and 137 and the eighth lens 118, 128, and 138 along the optical axis may be greater than the distance between the first lenses 111, 121, and 131 and the second lenses 112, 122, and 132 or the distance between the second lenses 112, 122, and 132 and the third lenses 113, 123, and 133, or may be greater than the distances between the fourth to sixth lenses, and may be, for example, 0.4 mm or more.

Optical systems according to the first to third embodiments of the invention may satisfy at least one or two or more of the equations described below. Accordingly, the optical system according to the first to third embodiments may have an optically improved effect.

[Equation 1]

$$0 < BFL/TTL < 0.5$$

In Equation 1, BFL means a distance from an apex of the sixteenth image-side surface S16 of the eighth lenses 118, 128, and 138 to the image sensor 190, and TTL means a distance from an apex of the object-side first surface S1 of the first lenses 111, 121, and 131 to the image sensor 190. Equation 1 may provide a high-resolution optical system by providing TTL with a longer length than due to BFL.

[Equation 2]

$$0 < BFL/Img < 0.5$$

In Equation 2, Img means a vertical distance from the optical axis Lx on the image sensor 190 to the diagonal end of 1.0F. Equation 2 shows the relationship between the distance from the apex of the sixteenth image surface S16 of the eighth lenses 118, 128, and 138 to the image sensor 190 and the distance from the optical axis Lx to 1.0F.

[Equation 3]

$$0.5 < F/TTL < 1.2$$

In Equation 3, F means the total effective focal length of the optical system.

[Equation 4]

$$1.2 < F/D1 < 2.4$$

In Equation 4, D1 means the effective diameter of the first lenses 111, 121, and 131. The effective diameters of the first lenses 111, 121, and 131 may be smaller than the total effective focal length F.

[Equation 5]

$$0.5 < TTL/D8 < 1.5$$

In Equation 5, D8 means the effective diameter of the eighth lenses 118, 128, and 138. The effective diameter of the eighth lenses 118, 128, and 138 may be larger or smaller than the total effective focal length F.

[Equation 6]

$$0.5 < f2/F < 1.5$$

In Equation 6, f2 means the focal length of the second lenses 112, 122, and 132.

[Equation 7]

$$-5 < f2/f3 < 0$$

In Equation 7, f3 means the focal length of the third lenses 113, 123, and 133.

[Equation 8]

$$0.5 < f2/f28 < 1.5$$

In Equation 8, f28 is the combined focal length from the second lens to the eighth lens in the optical systems of the first to third embodiments.

[Equation 9]

$$0.5 < f2/f12 < 1.5$$

In Equation 9, f12 means the combined focal length of the first lenses 111, 121, and 131 and the second lenses 112, 122, and 132.

[Equation 10]

$$0.5 < f28 / F < 1.5$$

As shown in Equation 10, the combined focal length from the second lens to the eighth lens f28 in the optical system may be smaller or larger than the total focal length F.

[Equation 11]

$$0.5 < f12/F < 1.5$$

As shown in Equation 11, the combined focal length f12 of the first lens and the second lens in the optical system may be smaller or larger than the total focal length F.

[Equation 12]

$$0 < L2R1/|L2R2| < 1$$

In Equation 12, L2R1 means the radius of curvature of the third object-side surface S3 of the second lenses 112, 122, and 132, and IL2R21 means an absolute value of the radius of curvature of the fourth image surface S4. The radius of curvature of the third surface S3 may be smaller than the absolute value of the radius of curvature of the fourth surface S4.

[Equation 13]

$$0 < L3R2/|L3R1| < 1$$

In Equation 12, L3R1 means the radius of curvature of the object-side fifth surface S5 of the third lenses 113, 123, and 133, and IL3R21 means the absolute value of the curvature radius of the sixth image surface S6. The radius of curvature of the fifth surface S5 may be greater than the absolute value of the radius of curvature of the sixth surface S6.

[Equation 14]

$$0.7 < G2/G3 < 1.2$$

In Equation 14, G2 means the refractive index of the second lenses 112, 122, and 132 at 587 nm, and G3 means the refractive index of the third lenses 113, 123, and 133 at 587 nm.

[Equation 15]

$$1 < T2/T3 < 5$$

In Equation 15, T2 means the center thickness (thickness on the optical axis) of the second lenses 112, 122, and 132, and T3 means a center thickness (thickness on the optical axis) of the third lenses 113, 123, and 133. The center thickness T2 of the second lenses 112, 122, and 132 may be greater than 1 time and less than or equal to 5 times the center thickness T3 of the third lenses 113, 123, and 133, for example, in a range of 2 to 4 times, and optical performance may be improved by the difference between the thicknesses T2 and T3 of the third lens.

Optical systems according to the first to third embodiments of the invention may satisfy at least one, two or more, or all of Equations 1 to 15. In this case, the optical system may implement a high-definition and high-resolution imaging lens system. Also, by at least one of Equations 1 to 15, unnecessary light entering the optical system may be blocked, aberrations may be corrected, and performance of the optical system may be improved.

Table 7 is an example of preferred values of the items disclosed in Equations 1 to 15 of the first to third embodiments.

[Table 7]

| Item | First embodiment | Second embodiment | Third embodiment |
|------|------------------|-------------------|------------------|
| BFL | 1.165 | 1.146 | 1.16 |
| TTL | 6.25 | 6.29 | 6.37 |
| Img | 4.536 | 4.536 | 4.536 |
| F | 5.010 | 5.113 | 5.248 |
| D1 | 2.890 | 2.700 | 2.800 |
| D8 | 7.290 | 7.236 | 7.140 |
| f2 | 3.773 | 3.874 | 3.778 |
| f3 | -8.916 | -9.516 | -8.971 |
| f28 | 4.400 | 4.748 | 4.810 |

(continued)

| Item | First embodiment | Second embodiment | Third embodiment |
|---|---|---|---|
| f12 | 4.137 | 4.113 | 4.034 |
| L2R1 | 2.213 | 2.293 | 2.253 |
| L2R2 | -26.543 | -24.289 | -21.713 |
| L3R1 | 6.013 | 5.394 | 5.371 |
| L3R2 | 2.967 | 2.886 | 2.802 |
| G2 | 1.544 | 1.544 | 1.544 |
| G3 | 1.671 | 1.671 | 1.671 |
| T2 | 0.771 | 0.772 | 0.766 |
| T3 | 0.250 | 0.250 | 0.250 |

Table 8 shows preferred values obtained by Equations 1-15 using the values in Table 1.

[Table 8]

| Item | Equation | First embodiment | Second embodiment | Third embodiment |
|---|---|---|---|---|
| 1 | BFL/TTL | 0.186 | 0.182 | 0.182 |
| 2 | BFL/Img | 0.257 | 0.253 | 0.256 |
| 3 | F/TTL | 0.802 | 0.813 | 0.824 |
| 4 | F/D1 | 1.734 | 1.894 | 1.874 |
| 5 | TTL/D8 | 0.857 | 0.869 | 0.892 |
| 6 | f2/F | 0.753 | 0.758 | 0.720 |
| 7 | f2/f3 | -0.423 | -0.407 | -0.421 |
| 8 | f2/f28 | 0.858 | 0.816 | 0.785 |
| 9 | f2/f12 | 0.912 | 0.942 | 0.937 |
| 10 | f28/F | 0.878 | 0.929 | 0.917 |
| 11 | f12/F | 0.826 | 0.804 | 0.769 |
| 12 | L2R1/\|L2R2\| | 0.083 | 0.094 | 0.104 |
| 13 | L3R2/\|L3R1\| | 0.493 | 0.535 | 0.522 |
| 14 | G2/G3 | 0.924 | 0.924 | 0.924 |
| 15 | T2/T3 | 3.084 | 3.088 | 3.064 |

As shown in Tables 1 to 8 above, it may be confirmed that the first to third embodiments of the invention satisfy Equations 1 to 15.

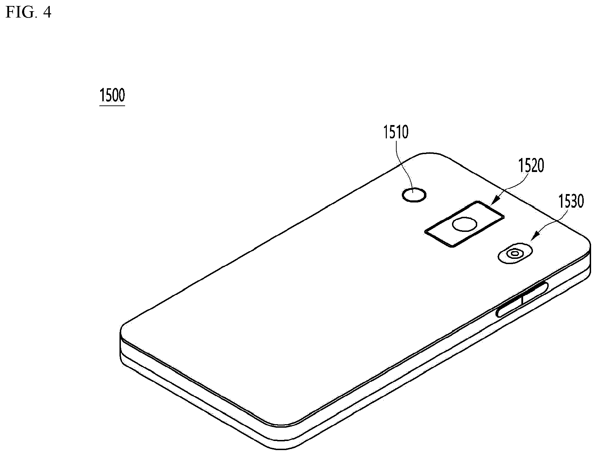

FIG. 4 is a perspective view illustrating an example of a moving device to which an optical system according to an embodiment of the invention is applied. As shown in FIG. 4, the mobile terminal 1500 may include a camera module 1520, a flash module 1530, and an autofocus device 1510 provided on one side or rear side. Here, the autofocus device 1510 may include a surface emitting laser device and a light receiver as a light emitting layer. The flash module 1530 may include an emitter emitting light therein. The flash module 1530 may be operated by operating a camera of a mobile terminal or by a user's control. The camera module 1520 may include an image capturing function and an autofocus function. For example, the camera module 1520 may include an autofocus function using an image. The autofocus device 1510 may include an autofocus function using a laser. The autofocus device 1510 may be mainly used in a condition in which an autofocus function using an image of the camera module 1520 is degraded, for example, a proximity of 10 m or less or a dark environment.

Features, structures, effects, etc. described in the above embodiments are included in at least one embodiment of the invention, and are not necessarily limited to only one embodiment. Furthermore, features, structures, effects, etc. illustrated in each embodiment can be combined or modified for other embodiments by those of ordinary skill in the art to which the embodiments belong. Accordingly, the contents related to such combinations and modifications should be interpreted as being included in the scope of the invention. In addition, although the embodiment has been described above, it is merely an example and does not limit the invention, and those of ordinary skill in the art to which the invention pertains are exemplified above in a range that does not depart from the essential characteristics of the present embodiment. It can be seen that various modifications and applications that have not been made are possible. For example, each component specifically shown in the embodiment can be implemented by modification. And differences related to such modifications and applications should be construed as being included in the scope of the invention defined in the appended claims.

**Claims**

1. An optical system comprising:

    a first lens, a second lens, a third lens, a fourth lens, a fifth lens, a sixth lens, a seventh lens, and an eighth lens sequentially disposed along an optical axis from an object side to an image side,
    wherein the second lens has a positive refractive power,
    wherein the third lens has a negative refractive power,
    wherein the seventh lens has a positive refractive power,
    wherein the eighth lens has negative refractive power,
    wherein refractive indices of the first, third, and fifth lenses are greater than refractive indices of the second, fourth, sixth, and eighth lenses, and
    wherein the following equation is satisfied:

$$1.2 < F/D1 < 2.4$$

    wherein F is a total effective focal length of the optical system, and D1 is an effective diameter of the first lens.

2. The optical system of claim 1, wherein a center thickness of the second lens is thicker than a center thickness of each of the first, third to eighth lenses.

3. The optical system of claim 1, wherein Abbe numbers of the second, fourth, sixth, and eighth lenses are 50 or more, and Abbe numbers of the third and fifth lenses are less than 30.

4. The optical system of any one of claims 1 to 3, comprising: an image sensor disposed on an image side of the eighth lens; and an optical filter between the image sensor and the eighth lens,

    wherein the optical system satisfies the following equations:

$$0 < BFL/TTL < 0.5$$

$$0 < BFL/Img < 0.5$$

    where BFL is a distance from an apex of the image-side surface of the eighth lens to the image sensor, TTL is a distance from an apex of an object-side first surface of the first lens to the image sensor, and Img is a vertical distance from the optical axis to 1.0F, which is a diagonal end of the image sensor.

5. The optical system of any one of claims 1 to 3, comprising an image sensor on an image side of the eighth lens and an optical filter between the image sensor and the eighth lens,

    wherein the optical system satisfies the following equation:

$$0.5 < TTL/D8 < 1.5$$

where TTL is a distance from an apex of an object-side first surface of the first lens to the image sensor, and D8 is an effective diameter of the eighth lens.

6. The optical system of any one of claims 1 to 3,

   wherein the optical system satisfies the following equations:

$$0.5 < f2/F < 1.5$$

$$-5 < f2/f3 < 0$$

   wherein F is a total effective focal length of the optical system,
   wherein f2 is a focal length of the second lens, and
   wherein f3 is a focal length of the third lens.

7. An optical system comprising:

   a first lens, a second lens, a third lens, a fourth lens, a fifth lens, a sixth lens, a seventh lens, and an eighth lens sequentially disposed along an optical axis from an object side to an image side,
   wherein a center thickness of the second lens is greater than a center thickness of each of the first, third to eighth lenses,
   wherein an Abbe number of the second lens is greater than Abbe numbers of the third and fifth lenses,
   wherein the following equations are satisfied:

$$0.5 < TTL/D8 < 1.5$$

$$0 < |f2/f3| < 5$$

   wherein TTL is a distance from an apex of an object-side first surface of the first lens to the image sensor, D8 is an effective diameter of the eighth lens, f2 is a focal length of the second lens, and f3 is a focal length of the third lens.

8. The optical system of claim 7, wherein a radius of curvature of an object-side surface of the second lens is L2R1 and an absolute value of a radius of curvature of an image-side surface of the second lens is |L2R2|, wherein the following equation is satisfied: $0 < L2R1/|L2R2| < 1$.

9. The optical system of claim 8, wherein when a radius of curvature of an object-side surface of the third lens is L3R1 and an absolute value of a radius of curvature of an image-side surface of the second lens is |L3R2|, wherein the following relationship is satisfied: $0 < L3R2/|L3R1| < 1$.

10. The optical system of any one of claims 7 to 9, wherein a refractive index of the second lens at 587 nm is G2 and a refractive index of the third lens at 587 nm is G3, wherein the following relationship is satisfied: $0.7 < G2/G3 < 1.2$.

11. The optical system of any one of claims 7 to 9, wherein a center thickness of the second lens is T2 and a center thickness of the third lens is T3, wherein the following relationship is satisfied: $1 < T2/T3 < 5$.

12. An optical system comprising:

   a first lens, a second lens, a third lens, a fourth lens, a fifth lens, a sixth lens, a seventh lens, and an eighth lens sequentially disposed along an optical axis from an object side to an image side;
   wherein the following equations are satisfied:

$$1.2 < F/D1 < 2.4$$

$$0.5 < TTL/D8 < 1.5$$

$$0 < |f2/f3| < 5$$

wherein F is a total effective focal length of the optical system, D1 is an effective diameter of the first lens, TTL is a distance from an apex of an object-side first surface of the first lens to the image sensor, D8 is an effective diameter of the eighth lens, f2 is a focal length of the second lens, and f3 is a focal length of the third lens.

13. The optical system of claim 12, wherein a distance between the seventh lens and the eighth lens on the optical axis is greater than a second distance between the first lens and the second lens.

14. The optical system of claim 13, wherein the first distance and the second distance are equal to or greater than 0.4 mm.

15. The optical system of any one of claims 12 to 14, wherein a center thickness of the second lens is in a range of 2 to 4 times a center thickness of the third lens.

FIG. 1

FIG. 2

FIG. 3

FIG. 4

**INTERNATIONAL SEARCH REPORT**

| International application No. |
| --- |
| **PCT/KR2021/010652** |

| | |
| --- | --- |
| **A.** | **CLASSIFICATION OF SUBJECT MATTER** |
| | **G02B 13/00**(2006.01)i; **G02B 9/64**(2006.01)i; **G02B 3/00**(2006.01)i; **G02B 3/04**(2006.01)i; **G02B 5/20**(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

G02B 13/00(2006.01); G02B 13/04(2006.01); G02B 13/18(2006.01); G02B 3/14(2006.01); G02B 9/64(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유효경(effective aperture), 제8 렌즈(8th lens), 전체 유효 초점 거리(total effecive focal distance), 굴절률(refractive index)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2020-013082 A (AAC ACOUSTIC TECHNOLOGIES(SHENZHEN) CO., LTD.) 23 January 2020 (2020-01-23) See tables 1 and 3, claim 1 and figure 2. | 12,13 |
| A | | 1-11,14,15 |
| A | JP 2019-139238 A (NITTOH KOGAKU K.K.) 22 August 2019 (2019-08-22) See paragraphs [0016]-[0021] and figures 1 and 2. | 1-15 |
| A | US 2020-0249437 A1 (KANTATSU CO., LTD.) 06 August 2020 (2020-08-06) See table 5 and figure 5. | 1-15 |
| A | KR 20-0438209 Y1 (DAI WON OPTICAL CO., LTD.) 29 January 2008 (2008-01-29) See claims 1 and 2 and figure 1a. | 1-15 |
| A | JP 2018-040858 A (CANON INC.) 15 March 2018 (2018-03-15) See paragraph [0115] and figure 1. | 1-15 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 November 2021** | **01 December 2021** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<div align="center">

**INTERNATIONAL SEARCH REPORT**
**Information on patent family members**

</div>

| International application No. |
| --- |
| **PCT/KR2021/010652** |

| Patent document cited in search report | | | Publication date (day/month/year) | Patent family member(s) | | | Publication date (day/month/year) |
| --- | --- | --- | --- | --- | --- | --- | --- |
| JP | 2020-013082 | A | 23 January 2020 | CN | 109541781 | A | 29 March 2019 |
| | | | | JP | 6460506 | B1 | 30 January 2019 |
| | | | | US | 10775594 | B2 | 15 September 2020 |
| | | | | US | 2020-0026042 | A1 | 23 January 2020 |
| | | | | WO | 2020-125163 | A1 | 25 June 2020 |
| JP | 2019-139238 | A | 22 August 2019 | EP | 3474059 | A1 | 24 April 2019 |
| | | | | JP | 6563130 | B2 | 21 August 2019 |
| | | | | WO | 2017-221949 | A1 | 28 December 2017 |
| US | 2020-0249437 | A1 | 06 August 2020 | CN | 111538133 | A | 14 August 2020 |
| | | | | CN | 212009115 | U | 24 November 2020 |
| | | | | JP | 2020-126183 | A | 20 August 2020 |
| | | | | JP | 6864969 | B2 | 28 April 2021 |
| KR | 20-0438209 | Y1 | 29 January 2008 | | None | | |
| JP | 2018-040858 | A | 15 March 2018 | JP | 6849350 | B2 | 24 March 2021 |
| | | | | US | 10281735 | B2 | 07 May 2019 |
| | | | | US | 2018-0067333 | A1 | 08 March 2018 |

Form PCT/ISA/210 (patent family annex) (July 2019)